# EUROPEAN PATENT SPECIFICATION

(11) **EP 1 449 366 B1**
(45) Date of publication and mention of the grant of the patent: **12.04.2006**
(21) Application number: 02790383.0
(22) Date of filing: 15.11.2002
(51) Int. Cl.: H04N 5/92

(54) **RECORDING OF BROADCASTING ENHANCEMENT SERVICES**
AUFNAHME VON RUNDFUNK-VERBESSERUNGSDIENSTEN
ENREGISTREMENT DE DONNEES COMPLEMENTAIRES A DES SERVICES DE DIFFUSION

(30) Priority: 28.11.2001 EP 01128232
(43) Date of publication of application: 25.08.2004
(73) Proprietor: Thomson Licensing, 92100 Boulogne-Billancourt (FR)
(72) Inventor: ADOLPH, Dirk, 30952 Ronnenberg (DE); BLAWAT, Meinolf, 30659 Hannover (DE); LI, Hui, 30419 Hannover (DE); SCHILLER, Harald, 30539 Hannover (DE)
(74) Representative: Rittner, Karsten
(86) International application number: PCT/EP2002/012797
(87) International publication number: WO 2003/047249

(56) References cited:
- WO-A-01/56270

## Description

The present invention relates to a method and device for processing broadcast data including user data, preferably audio data and/or video data, and additional information including linking information pointing to a data source, with receiving means for receiving the broadcast data and receiving supplementary data from the data source and storing means for storing the user data.

### Background

Nowadays an increasing number of broadcasting services provide additional information (metadata), which is sent besides the basic information like television or radio on the broadcasting channels. In the past such additional information has been completely embedded within the broadcast signal (e.g. teletext) and could be used on special decoding devices. In the meantime the form of additional information changes in that not all data are available any more on the same channel or even same service. An increasing number of broadcasting services also provide information links for an Internet address instead, to be used by a separate or integrated Internet browser device to download and display the information referenced by the links.

If a broadcasting service is conventionally recorded on a DVR for example, the recording encompasses only data available within the broadcasting service, but it lacks those additional information that are only being referenced and are not present within the broadcast service, like Internet content. In principle the Internet address link could be used when retrieving the recorded information by following the link and downloading the data at playback time. The disadvantage of this solution is the loss in validity of the Internet address when playing back the record after a long time period. If the content of the Internet address has changed or is not valid any more, the original information is lost and the link information has become worthless.

In view of that it is the object of the present invention to provide a device and method which enable improved capabilities for retrieving additional information, linking information of broadcast data points to.

### Invention

The invention, therefore, provides a device for processing broadcast data including user data preferably audio data and/or video data and additional information including linking information pointing to a data source, with receiving means for receiving said broadcast data from a broadcast source and using said linking information to receive supplementary data from said data source and means for storing said user data in a storing means, wherein said means for storing stores said supplementary data together with said user data, in said storing means.

Furthermore, the present invention provides a method for processing broadcast data including user data, preferably audio data and/or video data, and additional information including linking information pointing to a data source by receiving said broadcast data and using said linking information to receive supplementary data from said data source and storing said user data, wherein storing said supplementary data together with said user data.

Thus it is possible to download and store the data located on an Internet address pointed at by broadcast information. The storage is done onto the same media (e.g. DVR, hard disk, etc.). By playing back the recorded material it is possible to access the complete data including all Internet pages pointed at. The retrieval becomes independent from any service availability i.e. it can be used offline.

Additionally, the storage of Internet address content can be adapted to the user's preferences by additionally storing further Internet address content pointed at by the initial one (hierarchical storage). This may be done recursively until the users preferred storage depth has been reached.

The Internet address content stored on the disc can be retrieved independent from the broadcast information.

By an editing process it becomes possible to add further links within the additional and basic data. The added links may create connections between any arbitrary stored Internet address contents or between arbitrary broadcast information only.

A special analysis during loading and storage of Internet address content can detect already stored information and skip it rather than store it a second time. This can be done for redundancy avoidance. The analysis could also provide an update for an obsolete Internet address content.

### Drawing

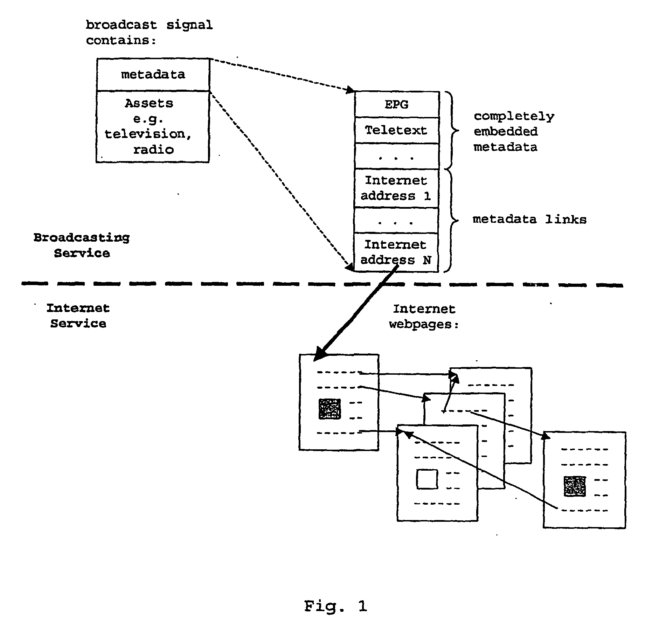

An exemplary embodiment of the invention is illustrated in the drawing and is explained in more detail in the following description. The drawing shows the principle data structure of broadcast data.

### Exemplary embodiments

Accompanying the introduction of digital broadcasting an ascending amount of enhancement services like Electronic Program Guide and other additional information further on called metadata is broadcast. "Metadata" is a term that is used for a huge number of different kinds of data. There are metadata for managing information resources, for describing technical functions of systems as well as the level and type of use of information resources or for similar purposes. The sources and characteristics of metadata are very diverse as well. Moreover, metadata does not have to be digital.

These metadata are not any longer completely embedded within the transmitted broadcasting channel but also encompass linking information to different services like Internet web addresses and web pages (see drawing). The broadcast linking information (metadata links) is used for the retrieval and display of the referenced Internet metadata by special browser devices. The Internet provides a wide range of enhancement services accompanying and also in addition to the broadcast information. Summaries, prosecute articles, news etc. are available on the Internet and can be viewed by the user. These Internet data can be of persistent interest for the user and are intended to be available permanently.

As depicted in the drawing, a broadcast signal contains metadata and assets. The term "assets" is chosen here for any kind of user data like video and/or audio data, e.g. television or radio signals.

The metadata contains controlling information for additional service like the Electronic Program Guide EPG. Furthermore, the metadata of the present embodiment includes teletext or videotext, respectively. The metadata may include further information being completely embedded therein.

Besides, these metadata being completely embedded in the broadcast signal, metadata may contain linking information as control data. Such control data serve to establish contact to external data sources like the Internet, any Intranet, internal or external memory devices or transmission channels of other providers.

As shown in the Figure, the metadata contains Internet addresses 1 to N. Thus, there is a link from the broadcasting service to the Internet service. The internet address points to a web page containing links to other web pages itself.

Metadata may also contain controlling information or formatting information as typically used in headers. Such controlling information may serve to control display devices like personal computers etc.

When recording the broaadcast signal on a DVR or a hard disc, a standard recorder is saving the broadcast signal including all broadcast metadata, but those metadata only referenced are missing. Therefore, when playing back the recorded material at a later time the request for metadata links will cause the loading of the missing additional metadata via the Internet, which might fail due to updates and/or changes in the remote resources.

As mentioned above, the Internet data being addressed by the Internet addresses of the metadata shall be available permanently. Thus, according to the present invention, it is suggested to download and store metadata referenced by broadcast metadata links. Due to the storing of the complete data and not only storing links to these data, they are available for the user at any time he wants independent of any changes in the Internet or the respective data source. The storage of the complete data includes the adaption of the links within the recorded metadata to point to data on a local disc or distributed storage devices.

According to a preferred embodiment the recording of Internet metadata may be individually adapted to preferences defined by the user. For this the user may define a storage depth for hierarchically storing; i.e. further Internet content pointed at by the initial one recursively may be stored until the hierarchy depth is reached.

Another possibility of adapting the recording of Internet metadata may be to determine the Internet content to be updated or preserved when there are changes in the web. Furthermore, during the recording process, duplicates of the Internet content may be determined in order to avoid redundant storage. Moreover, any filter may be introduced for recording metadata.

After recording these metadata there is provided a visualisation of and navigation in the stored referenced metadata. This can be performed independently of the broadcast content. The surfing in these metadata is possible independently of the Internet, i.e. offline, while remaining within the stored hierarchy depth. It is switched back to the Internet service, i.e. online, when the storage hierarchy depth is exceeded.

The user is able to edit the additional stored metadata by adding further links and/or storing further metadata from the Internet. This can be done by creating user-defined collections, annotations or short cuts. The editing also includes the adding of further self-generated information (assets) like pictures, videos, audios, etc.. Thereby, the links may connect asset data with metadata, metadata with metadata and/or asset data with asset data.

Additionally, there is provided a tool for searching within metadata stored on a digital video recorder (DVR) or hard disk. Once stored on a storing medium the search within metadata is possible on every device, because the removable storing medium is carrying all metadata.

Summarising the above, the present invention makes accessible all the metadata independent of Internet availability due to additional storage of metadata link contents parallel to the broadcast information. Additionally, there is provided further editing capabilities for the user-defined collections, annotations and short cuts.

## Claims

1. Device for processing broadcast data including user data preferably audio data and/or video data and additional information including linking information pointing to a data source with
receiving means for receiving, said broadcast data from a broadcast source and using said linking information to receive supplementary data from said data source and
means for storing said user data in a storing means,
**characterised in that**
said means for storing stores said supplementary data together with said user data in said storing means.

2. Device according to claim 1, wherein the data source is the Internet web, an intranet, an internal or external memory device and/or transmission means like a broadcast channel.

3. Device according to claim 1 or 2, wherein said storing means is a digital video recorder or a hard disc.

4. Device according to one of the claims 1 to 3, wherein said additional information includes metadata links being adaptable by said storing means to point to locally stored supplementary data.

5. Device according to one of the claims 1 to 4, wherein the supplementary data contains linking information pointing to at least second level supplementary data and said storing means being able to also store said second level supplementary data.

6. Device according to claim 5, further including controlling means for hierarchically storing said supplementary data and said second level supplementary data on said storing means.

7. Device according to one of the claims 1 to 6, further including retrieving means for retrieving user data, supplementary data and/or second level supplementary data from said storing means.

8. Device according to one of the claims 1 to 7 further including editing means for editing said user data, said supplementary data and/or said second level supplementary data.

9. Device according to claim 8, wherein said editing means enables adding of further linking information.

10. Device according to one of the claims 1 to 9, further including analysing means for analysing said broadcast data during receiving in order to avoid redundant storage.

11. Method for processing broadcast data including user data, preferably audio data and/or video data, and additional information including linking information pointing to a data source by
receiving said broadcast data from a broadcast source and using said linking information to receive supplementary data from said data source and
storing said user data,
**characterised by**
storing said supplementary data together with said user data.

12. Method according to claim 11, wherein the data source is the Internet web, an intranet, an internal or external memory device or transmission means like a broadcast channel.

13. Method according to claim 11 or 12 wherein metadata links being included in said additional information are adapted to point to locally stored supplementary data.

14. Method according to one of the claims 11 to 13, wherein said supplementary data contains linking information pointing to at least second level supplementary data and storing said second level supplementary data together with said user data and supplementary data.

15. Method according to claim 14, wherein said user data, supplementary data and second level supplementary data are hierarchically stored according to predetermined controlling information.

16. Method according to one of the claims 10 to 15, **characterised by** individually retrieving said user data, supplementary data and/or second level supplementary data from storing means.

17. Method according to one of the claims 10 to 16 **characterised by** editing said user data, supplementary data and/or second level supplementary data.

18. Method according to claim 17, wherein said editing includes adding of further linking information.

19. Method according to one of the claims 10 to 18, **characterised by** analysing the content of said broadcast data during receiving in order to avoid redundant storage.

## Patentansprüche

1. Einrichtung zum Verarbeiten von Broadcast-Daten, darunter Benutzerdaten, vorzugsweise Audiodaten und/oder Videodaten und zusätzlicher Informationen, einschließlich Verknüpfungsinformationen, die auf eine Datenquelle zeigen, mit
Empfangsmitteln zum Empfangen der Broadcast-Daten von einer Broadcast-Quelle und zum Verwenden der Verknüpfungsinformationen zum Empfangen von Ergänzungsdaten von der Datenquelle und
Mitteln zum Speichern der Benutzerdaten in einem Speichermittel,
**dadurch gekennzeichnet, daß**
die Mittel zum Speichern die Ergänzungsdaten zusammen mit den Benutzerdaten in dem Speichermittel speichern.

2. Einrichtung nach Anspruch 1, wobei die Datenquelle das Internet-Web, ein Intranet, ein internes oder externes Speichergerät und/oder Übertragungsmittel wie etwa ein Broadcast-Kanal ist.

3. Einrichtung nach Anspruch 1 oder 2, wobei das Speichermittel ein digitaler Videorecorder oder eine Festplatte ist.

4. Einrichtung nach einem der Ansprüche 1 bis 3, wobei die zusätzlichen Informationen Metadatenverknüpfungen umfassen, die durch die Speichermittel anpaßbar sind, so daß sie auf lokal gespeicherte Ergänzungsdaten zeigen.

5. Einrichtung nach einem der Ansprüche 1 bis 4, wobei die Ergänzungsdaten Verknüpfungsinformationen umfassen, die auf Ergänzungsdaten mindestens einer zweiten Ebene zeigen, und die Speichermittel in der Lage sind, auch die Ergänzungsdaten der zweiten Ebene zu speichern.

6. Einrichtung nach Anspruch 5, ferner mit Steuermitteln zum hierarchischen Speichern der Ergänzungsdaten und der Ergänzungsdaten der zweiten Ebene auf dem Speichermittel.

7. Einrichtung nach einem der Ansprüche 1 bis 6, ferner mit Abrufmitteln zum Abrufen von Benutzerdaten, Ergänzungsdaten und/oder Ergänzungsdaten der zweiten Ebene von dem Speichermittel.

8. Einrichtung nach einem der Ansprüche 1 bis 7, ferner mit Editiermitteln zum Editieren der Benutzerdaten, der Ergänzungsdaten und/oder der Ergänzungsdaten der zweiten Ebene.

9. Einrichtung nach Anspruch 8, wobei die Editiermittel ein Hinzufügen weiterer Verknüpfungsinformationen ermöglichen.

10. Einrichtung nach einem der Ansprüche 1 bis 9, ferner mit Analysemitteln zum Analysieren der Broadcast-Daten während des Empfangs, um redundante Speicherung zu vermeiden.

11. Verfahren zum Verarbeiten von Broadcast-Daten, einschließlich Benutzerdaten, vorzugsweise Audiodaten und/oder Videodaten sowie zusätzliche Informationen, darunter Verknüpfungsinformationen, die auf eine Datenquelle zeigen, durch
Empfangen der Broadcast-Daten von einer Broadcast-Quelle und Verwenden der Verknüpfungsinformationen, um Ergänzungsdaten aus der Datenquelle zu empfangen, und
Speichern der Benutzerdaten,
**gekennzeichnet durch**
Speichern die Ergänzungsdaten zusammen mit den Benutzerdaten.

12. Verfahren nach Anspruch 11, wobei die Datenquelle das Internet-Web, ein Intranet, ein internes oder externes Speichergerät oder ein Übertragungsmittel wie etwa ein Broadcast-Kanal ist.

13. Verfahren nach Anspruch 11 oder 12, wobei in den zusätzlichen Informationen enthaltene Metadatenverknüpfungen angepaßt werden, so daß sie auf lokal gespeicherte Ergänzungsdaten zeigen.

14. Verfahren nach einem der Ansprüche 11 bis 13, wobei die Ergänzungsdaten Verknüpfunginformation umfassen, die auf Ergänzungsdaten mindestens einer zweiten Ebene zeigen, und Speichern der Ergänzungsdaten der zweiten Ebene zusammen mit den Benutzerdaten und Ergänzungsdaten.

15. Verfahren nach Anspruch 14, wobei die Benutzerdaten, Ergänzungsdaten und Ergänzungsdaten der zweiten Ebene gemäß vorbestimmten Steuerinformationen hierarchisch gespeichert werden.

16. Verfahren nach einem der Ansprüche 10 bis 15, **gekennzeichnet durch** individuelles Abrufen der Benutzerdaten, Ergänzungsdaten und/oder Ergänzungsdaten der zweiten Ebene aus Speichermitteln.

17. Verfahren nach einem der Ansprüche 10 bis 16, **gekennzeichnet durch** Editieren der Benutzerdaten, Ergänzungsdaten und/oder Ergänzungsdaten der zweiten Ebene.

18. Verfahren nach Anspruch 17, wobei das Editieren das Hinzufügen weiterer Verknüpfungsinformationen umfaßt.

19. Verfahren nach einem der Ansprüche 10 bis 18, **gekennzeichnet durch** Analysieren des Inhalts der Broadcast-Daten während des Empfangs, um redundante Speicherung zu vermeiden.

## Revendications

1. Dispositif de traitement des données à diffusion générale incluant des données utilisateur, de préférence des données audio et/ou vidéo, et des informations supplémentaires incluant des informations de liaison renvoyant à une source de données avec
des moyens de réception pour recevoir lesdites données à diffusion générale d'une source de diffusion et utiliser lesdites informations de liaison pour recevoir des données supplémentaires de ladite source de données et
des moyens pour stocker lesdites données utilisateur dans un moyen de stockage,
**caractérisé en ce que**
ledit moyen de stockage stocke lesdites données complémentaires avec lesdites données utilisateur dans ledit moyen de stockage.

2. Dispositif selon la revendication 1, où la source de données est un site Internet, un Intranet, un dispositif de mémoire interne ou externe et/ou des moyens de transmission comme un canal de diffusion.

3. Dispositif selon la revendication 1 ou 2, où ledit moyen de stockage est un magnétoscope numérique ou un disque dur.

4. Dispositif selon une des revendications 1 à 3, où lesdites informations complémentaires comprennent des liens de métadonnées pouvant être adaptés à l'aide dudit moyen de stockage pour renvoyer vers des données complémentaires stockées localement.

5. Dispositif selon une des revendications 1 à 4, où les données complémentaires contiennent des informations de liaison indiquant au moins des données complémentaires de second niveau et ledit moyen de stockage étant capable d'enregistrer également lesdites données complémentaires de second niveau.

6. Dispositif selon la revendication 5, comprenant en outre des moyens de commande pour un stockage hiérarchique desdites données complémentaires et desdites données complémentaires de second niveau sur ledit moyen de stockage.

7. Dispositif selon une des revendications 1 à 6, comprenant en outre des moyens de récupération pour récupérer des données utilisateur, des données complémentaires et/ou des données supplémentaires de second niveau desdits moyens de stockage.

8. Dispositif selon une des revendications 1 à 7 comprenant en outre des moyens d'édition pour éditer lesdites données utilisateur, lesdites données supplémentaires et/ou lesdites données complémentaires de second niveau.

9. Dispositif selon la revendication 8, où lesdits moyens d'édition permettent d'ajouter des informations de liaison complémentaires.

10. Dispositif selon une des revendications 1 à 9, comprenant en outre des moyens d'analyse pour analyser lesdites données à diffusion générale lors de la réception afin d'éviter un stockage redondant.

11. Procédé pour le traitement de données à diffusion générale comprenant des données utilisateur, de préférence des données audio et/ou des données vidéo, et des informations complémentaires comprenant des informations de liaison renvoyant à une source de données pour
recevoir lesdites données à diffusion générale d'une source de diffusion et utiliser lesdites informations de liaison pour recevoir des données complémentaires de ladite source de données et
stocker lesdites données utilisateur,
**caractérisé par**
le stockage desdites données complémentaires avec lesdites données utilisateur.

12. Procédé selon la revendication 11, où la source de données est Internet, un Intranet, un dispositif de mémoire interne ou externe ou des moyens de transmission tels qu'un canal de diffusion.

13. Procédé selon la revendication 11 ou 12, où des liens de métadonnées compris dans lesdites informations complémentaires sont adaptés pour renvoyer aux données complémentaires stockées localement.

14. Procédé selon une des revendications 11 à 13, où lesdites données complémentaires contiennent des informations de liaison renvoyant aux données complémentaires de second niveau au moins et stockant lesdites données complémentaires de second niveau avec lesdites données utilisateur et données complémentaires.

15. Procédé selon la revendication 14, où lesdites données utilisateur, données complémentaires et données complémentaires de second niveau sont stockées hiérarchiquement selon les informations de commande prédéterminées.

16. Procédé selon une des revendications 10 à 15, **caractérisé par** la récupération individuelle desdites données utilisateur, données complémentaires et/ou données complémentaires de second niveau du moyen de stockage.

17. Procédé selon une des revendications 10 à 16 **caractérisé par** l'édition desdites données utilisateur, données complémentaires et/ou données complémentaires de second niveau.

18. Procédé selon la revendication 17, où ladite édition comprend l'ajout d'informations de liaison complémentaires.

19. Procédé selon une des revendications 10 à 18, **caractérisé par** l'analyse du contenu desdites données à diffusion générale lors de la réception afin d'éviter un stockage redondant.
